# FASCICULE DE BREVET EUROPEEN

(11) **EP 1 984 298 B1**
(45) Date de publication et mention de la délivrance du brevet: **24.09.2014**
(21) Numéro de dépôt: 07730943.3
(22) Date de dépôt: 08.02.2007
(51) Int. Cl.: C01B 33/44, C08K 3/34, C08K 5/09, C08L 33/02

(54) **ARGILES MODIFIEES, PROCEDE D'OBTENTION ET APPLICATIONS**
MODIFIZIERTE TONE, VERFAHREN ZU IHRER GEWINNUNG UND ANWENDUNGEN DAVON
MODIFIED CLAYS, METHOD OF OBTAINING THEM, AND APPLICATIONS

(30) Priorité: 10.02.2006 FR 0601213; 10.02.2006 FR 0601214
(43) Date de publication de la demande: 29.10.2008
(73) Titulaire: Euracli, 38670 Chasse sur Rhône (FR)
(72) Inventeur: SILLION, Bernard, F-69005 Lyon (FR); RASTELLO-de BOISSESON, Marie, F-42800 Saint Martin la Plaine (FR)
(74) Mandataire: Thurgood, Alexander John
(86) Numéro de dépôt international: PCT/FR2007/000227
(87) Numéro de publication internationale: WO 2007/093687

(56) Documents cités:
- WO-A-02/06388
- FR-A- 2 842 758
- FR-A- 2 871 805
- KATO MAKOTO ET AL: "Synthesis of polypropylene oligomer-clay intercalation compounds" JOURNAL OF APPLIED POLYMER SCIENCE, vol. 66, no. 9, 28 novembre 1997 (1997-11-28), pages 1781-1785, XP002401435 JOHN WILEY & SONS INC, NEW YORK, NY, USA
- HASEGAWA NAOKI ET AL: "Preparation and mechanical properties of polypropylene-clay hybrids using a maleic anhydride-modified polypropylene oligomer" J APPL POLYM SCI; JOURNAL OF APPLIED POLYMER SCIENCE JAN 3 1998 JOHN WILEY & SONS INC, NEW YORK, NY, USA, vol. 67, no. 1, 3 janvier 1998 (1998-01-03), pages 87-92, XP002401438
- JUSKEY VICTOR P ET AL: "RHEOLOGY AND TENSILE PROPERTIES OF POLYPROPYLENE REINFORCED WITH GLYCEROL-TREATED MICA" CAN J CHEM ENG JUN 1982, vol. 60, no. 3, juin 1982 (1982-06), pages 334-341, XP008069553
- KAWASUMI MASAYA ET AL: "Preparation and mechanical properties of polypropylene-clay hybrids" MACROMOLECULES; MACROMOLECULES OCT 6 1997 ACS, WASHINGTON, DC, USA, vol. 30, no. 20, 6 octobre 1997 (1997-10-06), pages 6333-6338, XP002401437
- DATABASE WPI Week 198540 Derwent Publications Ltd., London, GB; AN 1985-247118 XP002401574 & JP 60 163950 A (ASAHI CHEM IND CO LTD) 26 août 1985 (1985-08-26)
- DATABASE WPI Week 198911 Derwent Publications Ltd., London, GB; AN 1989-081146 XP002401575 & JP 01 033163 A (NIPPON SODA CO) 3 février 1989 (1989-02-03)
- GOPAKUMAR, T. G. ET AL: "Influence of clay exfoliation on the physical properties of montmorillonite/polyethylene composites" POLYMER , 43(20), 5483-5491 CODEN: POLMAG; ISSN: 0032-3861, 2002, XP002401436
- SANCHEZ-VALDES SAUL ET AL: "Effect of ionomeric compatibilizer on clay dispersion in polyethylene/clay nanocomposites" MACROMOLECULAR MATERIALS AND ENGINEERING, vol. 291, no. 2, 10 février 2006 (2006-02-10), pages 128-136, XP002401439 Avalaible on-line 16/01/06

## Description

### Domaine de l'invention

L'invention concerne des argiles naturelles modifiées par un agent modificateur polaire appartenant au groupe constitué par des oligomères à fonctions acides carboxyliques pour rendre ces argiles hydrophobes.

L'invention concerne également un procédé de transformation des argiles naturelles en argiles modifiées organophiles, au moyen de l'agent modificateur polaire.

L'invention concerne enfin l'utilisation des argiles naturelles rendues organophiles dans des domaines aussi divers que ceux de la thermorégulation, de l'ignifugation, de leur exploitation comme charge minérale organophile dans des milieux polymères ou comme support minéral organophile pour des composés organiques à supporter.

### Etat de la technique

Les argiles naturelles sont généralement reconnues appartenir au domaine des charges minérales comprenant par exemple le carbonate de calcium, le kaolin, l'alumine, la silice, l'oxyde de titane, le talc et bien d'autres encore. Ces charges minérales sont utilisées dans de nombreux domaines comme celui :
- Du revêtement de surfaces à protéger dans le domaine du bâtiment, de l'industrie du bois, des métaux, au moyen de peintures ou de certains vernis contenant des charges minérales,
- Du couchage du papier au moyen de suspension aqueuse par exemple de carbonate de calcium, de carbonate de magnésium, de sulfate de baryum pulvérulents,
- De l'introduction de charges minérales micrométriques ou nanométriques au sein d'une matrice polymère thermoplastique ou thermodurcissable dans le but de créer des matériaux polymères chargés ayant des propriétés améliorées telles que par exemple leurs propriétés mécaniques, thermiques, de surface, de barrières aux gaz, d'ignifugation, d'aptitude à être peint et ce, par rapport à ces mêmes propriétés de matériaux polymères non chargés..

Ces argiles naturelles peuvent être dès lors utilisées comme charges minérales dans les domaines précédemment évoqués mais comme elles se présentent généralement sous une forme d'agglomérats lamellaires dont les lamelles forment des feuillets empilés liés entre eux, ces argiles lamellaires doivent être rendues organophiles dès lors que le domaine d'utilisation envisagé est un milieu organique tel qu'un polymère.

Pour certaines applications ces argiles doivent en outre être exfoliées pour fournir des charges minérales de taille appropriée.

Pour être exfoliées, ces argiles lamellaires se présentant sous l'aspect d'empilements de lamelles de feuillets ou encore de plaquettes superposées, sont soumises à un traitement approprié susceptible d'assurer leur séparation les-unes des autres pour atteindre l'état recherché de feuillets ou lamelles élémentaires indépendantes et/ou d'empilements partiellement désagrégés de lamelles ou de feuillets de telle sorte que ces lamelles et feuillets ainsi libérés aient un dimensionnement adapté au milieu récepteur dans lequel ces argiles exfoliées doivent intervenir.

Quelque soit le niveau d'agrégation des argiles, elles doivent pouvoir être mises en contact avec, ou dispersées d'une manière homogène dans le milieu récepteur auquel elles sont destinées sans qu'il y ait répulsion, création de zones de sur-concentration en charges ou de zones de sous-concentration, ou encore sans qu'il y ait apparition d'un phénomène de ré-agglomération in-situ par absence de compatibilité à l'égard dudit milieu récepteur : surtout si le milieu est organique par exemple une matrice polymère ou un hydrocarbure à longue chaîne.

En d'autres termes, les charges minérales formées par ces argiles doivent pouvoir être acceptées par le milieu récepteur sans manifestation de rejet : c'est pour cette raison qu'elles doivent être rendues préalablement compatibles à l'égard du milieu récepteur auquel elles sont destinées.

De.ce fait, des procédés spécifiques ont déjà. été développés pour transformer les argiles naturelles en argiles organophiles par l'action d'agents modificateurs spécifiques, tels que des agents modificateurs organiques cationiques, des agents modificateurs organiques anioniques et des agents modificateurs organiques amphotères.

Un premier document (US 5,780,376) décrit un traitement permettant de rendre des argiles organophiles par l'intermédiaire de composés organo-onium.

Ce traitement s'effectue en milieu liquide et consiste en un échange de cations entre les ions sodium présents sur les surfaces des lamelles d'argiles et un cation à échanger de l'agent modificateur, tel que de l'ammonium ou du phosphonium apporté par des composés organo-onium. Ces composés organo-onium sont, par exemple, des composés de formule +NH3R1, +NH2R2R3 ou +PR4R5R6R7 dans lesquelles les radicaux R1 à R7 sont des chaînes hydrocarbonées aliphatiques ayant au moins quatre atomes de carbone.

Mais de tels matériaux argileux, qui sont mis en oeuvre dans des traitements complexes, sont généralement utilisés comme matières premières en vue de la préparation de nano-charges.

Un deuxième type de traitement permettant de rendre organophiles des argiles naturelles consiste à traiter ces argiles au moyen d'une longue chaîne hydrocarbonée munie de fonctions polaires associée à un précurseur) de polymère thermodurcissable.

Ainsi un autre document (EP 0846661) décrit un procédé permettant d'obtenir un phylosilicate organophile destiné à être exfolié par contact des surfaces lamellaires du phylosilicate avec un composé organique, à longue chaîne carbonée d'au moins 6 atomes de carbone, ce composé organique étant fonctionnalisé par des fonctions polaires de type mono ou poly hydroxyle, ou acides mono et poly carboxylique et les sels s'y rattachant, ainsi que par d'autres fonctions polaires telles que les aldéhydes, les cétones, les amides, les amines, ou autres encore.

Toutefois, dans ce type de traitement qui est également destiné à l'exfoliation d'une argile le composé organique fonctionnalisé par un groupe polaire tel que défini ci-dessus n'est pas utilisé seul mais facilite l'introduction d'un deuxième composé pour fragiliser les pontages existants entre les feuillets d'argile selon le processus suivant :
- Le composé organique à longues chaînes alkyle, ayant au moins six carbones, et ayant au moins une fonction hydroxyle, poly-hydroxyle, acide carboxylique, ou autre, modifie la surface de l'argile,
- l'autre composé introduit est un monomère ou polymère de type époxy,
- Cette co-intercalation étant nécessaire pour créer un espace rigide entre deux couches d'argile et augmenter ainsi la distance entre ces couches d'argile pour le fragiliser et permettre leur séparation.

### Objet de l'invention

Le problème le plus important posé par les argiles naturelles lorsqu'on souhaite les utiliser en mélange avec un milieu formé de composés organiques, est celui de leur compatibilité avec ce milieu.

Ce problème de compatibilité a été réglé par des modifications de leur état de surface par des procédés complexes en plusieurs étapes.

C'est pourquoi parmi les objets fondamentaux assignés à l'invention, il peut être mentionné de créer des argiles organophiles par modification simple en une seule étape de leur état de surface afin de pouvoir les associer à des composés organiques:
- en sélectionnant parmi les agents modificateurs de l'état de surface desdites argiles des composés organiques qui s'associent aux dites surfaces
- en sélectionnant parmi les composés organiques qui s'associent aux surfaces d'argile ceux qui auront une énergie de surface la plus compatible avec le milieu organique récepteur
- en maintenant dans le temps la capacité renforcée d'accrochage par les argiles modifiées de composés organiques pouvant y être déposés quand ces argiles chargées de composés organiques sont mises en oeuvre dans des domaines techniques soumis à des contraintes mécaniques.

### Sommaire de l'invention

Dès lors, l'invention concerne d'abord des argiles naturelles modifiées pour les rendre organophiles et leur utilisation en particulier dans le domaine des matériaux thermorégulants ou la modification des propriétés des polymères.

Les argiles modifiées :
- sont obtenues par la transformation de leur état de surface au moyen d'un agent modificateur organique approprié en vue de les utiliser une fois modifiées comme charges minérales dans le domaine des polymères ou support minéral organophile pour l'adsorption de composés organiques,
- éliminent au moins partiellement les inconvénients manifestés dans l'état de la technique et apportent, en outre, de substantielles améliorations inexistantes dans les moyens décrits jusqu'à ce jour pour les rendre particulièrement efficaces dans le rôle qui leur est assigné, en particulier dans des applications où se produisent éventuellement des contraintes mécaniques.

Selon l'invention, les argiles naturelles modifiées et rendues organophiles au moyen d'un agent modificateur polaire d'origine organique pour augmenter leur capacité d'accrochage à l'égard de milieux récepteurs organiques, se caractérisent en ce qu'elles comportent selon une combinaison nouvelle :
a) des argiles naturelles contenant dans leurs structures des ions métalliques monovalents et/ou polyvalents,
b) un agent polaire de modification de l'état de surface desdites argiles choisi dans le groupe des oligomères à chaînes hydrocarbonées ayant des fonctions acide carboxylique.

L'invention concerne également un procédé de traitement en continu des argiles naturelles à modifier pour les rendre organophiles.

L'invention concerne enfin l'utilisation des argiles naturelles modifiées, rendues organophiles, comme charges minérales et/ou supports minéraux à capacité d'accrochage renforcée à l'égard des milieux récepteurs d'origine organique.

### DESCRIPTION DETAILLEE DE L'INVENTION

Les argiles naturelles modifiées selon l'invention qui sont destinées à devenir des charges minérales et/ou des supports minéraux organophiles à capacité d'accrochage renforcée à l'égard de composés organiques, sont formées d'argiles naturelles contenant dans leurs structures des ions métalliques monovalents et/ou polyvalents, d'un agent polaire de modification de l'état de surface desdites argiles choisi dans le groupe des oligomères à chaînes hydrocarbonées ayant des fonctions acide carboxylique.

Selon l'invention, les argiles naturelles pulvérulentes, à modifier sont choisies parmi celles qui contiennent dans leur structure au moins un type d'ions métalliques monovalents et/ou polyvalents, ces ions pouvant par exemple, appartenir au groupe constitué par le sodium, le potassium, le lithium, le calcium, le magnésium, le fer ferreux, le fer ferrique et l'aluminium, présents seuls ou combinés dans lesdites argiles.

Ces argiles peuvent être choisies préférentiellement dans les groupes constitués par les smectites, les chlorites, les bentonites, les attapulgites, les hectorites, les laponites, les montmorillonites, les micas, pris seuls ou en mélanges.

Les argiles naturelles modifiées sont constituées de particules de taille allant de 0,5 à 10 micromètres et préférentiellement de 0,5 à 3 micromètres.

Selon l'invention, l'agent polaire de modification de l'état de surface desdites argiles est choisi parmi les oligomères à chaînes hydrocarbonées comportant des fonctions acides carboxyliques, ces fonctions acides carboxyliques pouvant être associées à d'autres fonctions acides telles que phosphorique, sulfonique, phosphonique, seules ou associées.

Ces oligomères à chaînes hydrocarbonées constituant l'agent polaire de modification selon l'invention sont choisis parmi les copolymères polycarboxyliques résultant de la copolymérisation d'au moins un monomère ayant au moins une fonction acide carboxylique avec un monomère oléfinique ou résultant du greffage de polymères ou copolymères par des monomères insaturés contenant des fonctions acides carboxyliques. Ces copolymères sont des oligomères constitués de chaînes hydrocarbonées, saturées ou insaturées, de préférence linéaires à fonctions acides carboxyliques, éventuellement partiellement estérifiés.

L'agent polaire de modification de l'état de surface desdites argiles est à base de polyoléfine ayant des fonctions acide carboxylique et est obtenu par copolymérisation d'au moins un monomère ayant au moins une fonction acide carboxylique avec au moins une oléfine ou à partir de polymères oléfiniques à bas poids moléculaire, fonctionnalisés par greffage direct au moyen d'un monomère insaturé comportant au moins une fonction acide carboxylique ou une fonction anhydride.

Dès lors, le monomère approprié, qui apporte selon l'invention, au moins une fonction acide carboxylique par copolymérisation ou greffage est choisi dans le groupe constitué par les monomères éthyléniques portant au moins une fonction acide carboxylique choisis parmi les monoacides tels que les acides acrylique, métacrylique, crotonique, isocrotonique, cinnamique, les diacides tels que les acides itaconique, fumarique, maléïque, citraconique, les anhydrides d'acides carboxyliques tels que les anhydrides maléïque, itaconique, citraconique, ou tout autre monomère présentant une double liaison pauvre en électrons.

Il a été constaté que ces oligomères modifiaient efficacement la surface des argiles sans qu'il soit besoin d'y adjoindre d'autres composés organiques contrairement à ce qui est enseigné dans l'art antérieur.

L'agent polaire de modification de l'état de surface desdites argiles constitué par l'un au moins des copolymères précités, fonctionnalisés par des fonctions acides carboxyliques, sont des oligomères préférentiellement à longueur de chaînes contrôlées dont la masse molaire est comprise entre 350 g/mol et 5000 g/mol et préférentiellement entre 350 et 2500 g/mol.

L'agent polaire de modification de l'état de surface desdites argiles constitué par l'un au moins des copolymères précités, fonctionnalisés par des fonctions acides carboxyliques, qui sont des oligomères préférentiellement à longueur de chaînes contrôlées, ont un indice de saponification compris entre 0 et 220 mg de KOH/g, un indice d'acide compris entre 25 mg de KOH/g et 160 mg de KOH/g et un point de fusion compris entre 50°C et 250 °C et de préférence entre 70°C et 120°C.

Selon l'invention, la quantité d'argiles naturelles pulvérulentes à modifier est comprise entre 99,9% et 75% en poids desdites argiles modifiées, et la quantité d'agent polaire de modification est comprise entre 0,1% et 25% en poids desdites argiles modifiées.

L'invention concerne également un procédé d'obtention en continu par extrusion des argiles naturelles modifiées. Ce procédé continu pratiqué à l'échelle industrielle consiste à mélanger les argiles naturelles pulvérulentes et l'agent polaire de modification pour produire les argiles naturelles modifiées aux propriétés améliorées, objet de l'invention.

Ces argiles naturelles modifiées sont obtenues en utilisant une extrudeuse à simple vis ou à double vis. Les meilleurs résultats d'homogénéisation sont acquis préférentiellement avec des extrudeuses double vis co- rotative, l'extrudeuse mise en oeuvre étant équipée de systèmes de chauffage et de refroidissement dans la plage des températures de fusion et de cristallisation de l'agent polaire de modification choisi.

Selon ce mode industriel d'obtention des argiles naturelles modifiées selon l'invention, l'introduction du matériau argileux à l'état naturel, se fait dans un premier fourreau de l'extrudeuse par l'intermédiaire d'une trémie doseuse alors que l'agent polaire de modification peut être introduit soit en même temps que l'argile dans la trémie d'alimentation indépendamment sous une forme fondue ou sous forme de granulés au moyen d'une pompe ou d'une vis doseuse.

Selon l'invention, le procédé d'obtention des argiles naturelles modifiées consiste à :
- Mettre en oeuvre l'argile, à l'état naturel, dont la structure contient des ions métalliques monovalents ou polyvalents,
- Mettre mécaniquement en contact intime l'agent polaire de modification de ladite argile avec ledit support minéral argileux à une température supérieure à celle du point de fusion de l'agent polaire de modification de l'argile ou en introduisant le copolymère modificateur dilué dans une paraffine.

Les argiles naturelles modifiées, une fois refroidies, se présentent sous la forme d'une poudre directement utilisable pour les différentes applications.

Les argiles naturelles modifiées selon l'invention peuvent être utilisées dans les polymères en tant que charges minérales organophiles, par exemple pour leur ignifugation, pour améliorer leur capacité à recevoir une peinture, pour rendre plus performant leurs caractéristiques physiques ou mécaniques, ou encore comme charges dans l'industrie des revêtements ou peuvent être encore utilisées comme supports organophiles pour des composés organiques à changements de phases dans le domaine de la thermorégulation sous la forme d'enductions de supports textiles, de revêtements de fibres, de revêtements d'intérieur d'automobile, de revêtements de panneaux rigides, de composants pour des produits destinés au bâtiment, de composants pour des emballages fonctionnels, de composants pour des produits et objets à usage médical et de confort de la personne physique ou support de principe actif organique.

Les exemples ci-après illustrent l'objet de l'invention sans pour autant en modifier la portée.

### Exemple 1 :

Cet exemple concerne l'obtention par extrusion d'argile naturelle modifiée par un oligomère à bas point de fusion.

L'argile modifiée selon l'invention est préparée par extrusion d'une composition qui comprend 90% en poids d'argile naturelle de type smectite commercialisée par la Société BENTOFRANCE sous le nom BENTONIL® SV et 10% d'un agent polaire de modification de l'argile.
L'agent polaire de modification de l'argile est un polymère à fonctions acide carboxylique, commercialisé sous le nom Ceramer^{®} 1608 par la Société BAKER PETROLITE. Cet agent polaire de modification de l'argile présente un point de fusion à 72°C.

La modification de l'argile naturelle par l'oligomère Ceramer® 1608 s'effectue dans une extrudeuse bi-vis corotative de type CLEXTRAL tournant à 800 T/mn.

L'argile pulvérulente est introduite en tête d'extrudeuse par une trémie doseuse avec un débit de 18kg/h et l'agent polaire de modification de l'argile préalablement liquéfié par fusion est introduit simultanément avec un débit de 2kg/h. L'extrudeuse comprenant 10 fourreaux, les 4 premiers fourreaux sont maintenus à une température de 80°C afin de maintenir l'agent polaire de modification de l'argile dans un état liquide, puis les 6 derniers fourreaux sont maintenus à la température ambiante. On récupère une poudre en sortie d'extrudeuse.

### Exemple n°2 :

Cet exemple concerne l'obtention par extrusion d'argile naturelle modifiée par un oligomère à haut point de fusion

L'argile modifiée selon l'invention est préparée par extrusion d'une composition qui comprend 68% d'argile naturelle de type smectite commercialisée par BENTOFRANCE sous le nom BENTONIL® SV, 12% d'un agent polaire de modification de l'argile et 20% de paraffine commercialisée sous l'appellation LINPAR® 18-20 par la Société SASOL.

L'agent polaire de modification de l'argile est un polymère à fonctions acide carboxylique commercialisé sous le nom Unicid^{®} 350 par la Société BAKER PETROLITE. Cet agent polaire de modification de l'argile présente un point de fusion à 84°C.

Cet agent polaire de modification de l'argile ayant un point de fusion plus 'élevé que dans l'exemple 1, on réalise dans un premier temps son pré-mélange avec de la paraffine liquide puis on y ajoute l'argile naturelle à modifier.

L'extrudeuse utilisée est l'extrudeuse bivis co-rotative de l'exemple 1 dont la vitesse de rotation des vis est fixée à 500 T/mn. La paraffine préalablement liquéfiée est introduite en tête de l'extrudeuse avec un débit de 5kg/h. Dans le premier fourreau maintenu à 60°C, on introduit l'Unicid® 350 sous forme de petits granulés avec un débit de 3kg/h. Les deux fourreaux suivants sont maintenus à 60°C afin de réaliser le pré-mélange de l'agent polaire de modification de l'argile et de la paraffine. Dans le quatrième fourreau à 60°C, l'argile en poudre est ajoutée à l'aide d'une trémie doseuse avec un débit de 17kg/h. La température décroît progressivement dans les fourreaux suivants jusqu'à la température ambiante. On récupère, en sortie d'extrudeuse, des petits granulés de taille irrégulière.

### Exemple n°3 :

Cet exemple concerne le maintien en suspension dans un solvant organique d'une argile naturelle modifiée par un oligomère polyacide en vue de démontrer le fort pouvoir hydrophobisant des oligomères de l'invention.

Deux compositions référencées M1 et M2 ont été préparées comprenant de la paraffine commercialisée sous l'appellation LINPAR^{®} 18-20 de la société SASOL et une argile naturelle de type smectite commercialisée par la société BENTOFRANCE sous le nom BENTONIL^{®} SV. Dans la composition M1 témoin, cette argile n'a pas été modifiée par un agent de modification. Par contre, dans la composition M2, l'argile a été modifiée par un agent de modification qui est un polymère à fonctions acide carboxylique commercialisé sous le nom Ceramer^{®} 1608 par la société BAKER PETROLITE et mis en oeuvre par un procédé décrit dans l'exemple 1.

Les proportions des divers composés dans chaque composition préparée étaient les suivantes :
- Composition témoin M1 (à titre de comparaison) : 50% en poids de paraffine, 50% en poids d'argile naturelle
- Composition M2 selon l'invention : 50 % en poids de paraffine, 42,5% en poids d'argile naturelle, 7,5 % en poids de Ceramer^{®} 1608.

La paraffine rendue préalablement liquide a été ajoutée à l'argile pour la composition M1 et à un pré-mélange chauffé au bain-marie composé d'argile et d'agent polaire de modification de l'état de surface des argiles naturelles pour la composition M2. Chaque mélange obtenu est maintenu en chauffage au bain-marie, après contact intime, pendant une durée de 5 minutes puis est refroidi. Dans chacun de ces mélanges M1 et M2, a été ajoutée la même quantité d'un solvant organique (cyclohexane). On laisse reposer les mélanges M1 et M2 dans ledit solvant pendant 10 minutes puis on observe leur état :
- Concernant la composition M1, il a été constaté que ladite composition M1 a décanté et présente une phase solide comprenant l'argile naturelle avec un peu de paraffine et une phase surnageante liquide et transparente constituée du solvant organique et d'une partie de la paraffine dissoute dans le solvant organique.
- Concernant la composition M2, dont l'argile pulvérulente naturelle a été modifiée par l'introduction de l'agent polaire de modification de l'argile selon l'invention, qui est le Ceramer^{®} 1608, il est constaté une absence de décantation, signifiant que l'agent polaire de modification de l'argile retenu par l'argile est très performant pour modifier cette argile et la disperser en milieu organique et a totalement modifié la surface de l'argile.

### Exemple n°4 :

Cet exemple concerne l'hydrophobisation plus importante obtenue avec l'agent polaire de modification de l'argile objet de l'invention, comparée aux argiles modifiées selon l'art antérieur et comparée à une argile modifiée par un mono acide de faible masse molaire.

Des essais comparatifs ont été réalisés à partir de compositions référencées M3, M4, M5 et M6, mettant en évidence la résistance à l'extraction, par un solvant organique, de paraffines physisorbées sur le support minéral argileux modifié selon l'invention.

Les deux compositions préparées référencées M3 et M4 comprennent une paraffine commercialisée sous l'appellation LINPAR^{®} 18-20 de la société SASOL et comme argile dans la composition M3, une argile naturelle de type smectite commercialisée par la société BENTOFRANCE sous le nom BENTONIL^{®} SV, et dans la composition M4 une argile rendue organophile commercialisée par la société Elementis sous le nom BENTONE^{®} 38VCG. Les deux autres compositions préparées M5 et M6 comprennent la même paraffine commercialisée sous le nom LINPAR^{®} 18-20 et comme argile, l'argile naturelle de type smectite qui, pour M5, est modifiée par un agent polaire de modification de l'argile qui est un acide organique à longue chaîne hydrocarbonée (à titre de comparaison) et pour M6 par un agent polaire de modification de l'argile qui est un polymère à fonctions acide carboxylique selon l'invention.

Le polymère à fonctions acide carboxylique retenu dans la composition référencée M6 est l'Unicid® 350 de BAKER PETROLITE.

Les proportions des divers composés dans chaque composition étaient les suivantes :
- Composition M3 : 50% de paraffine, 50% d'argile naturelle
- Composition M4 : 50 % de paraffine, 50% d'argile commerciale organophile.
- Composition M5 : 50 % de paraffine, 42,5% d'argile naturelle, 7,5% d'acide hexanoïque.
- Composition M6 selon l'invention : 50 % de paraffine, 42,5% d'argile naturelle, 7,5% d'Unicid® 350.

Pour les compositions M3 et M4, les 50% de paraffine rendue liquide préalablement sont ajoutés à l'argile. Le mélange obtenu est chauffé au bain-marie, et après contact intime d'une durée de 5 minutes est refroidi. Puis est ajoutée dans chacun de ces deux mélanges la même quantité de cyclohexane agissant comme solvant d'extraction de la paraffine non fixée.

Pour les compositions M5 et M6, un pré-mélange d'argile et d'agent polaire de modification de l'état de surface des argiles naturelles est chauffé au bain-marie, sous agitation. A ce pré-mélange sont ajoutés les 50% de paraffine rendue liquide préalablement. Le mélange résultant, obtenu après contact intime d'une durée de 5 minutes est ensuite refroidi. Puis est ajoutée dans chacun de ces deux mélanges la même quantité de cyclohexane agissant comme solvant d'extraction de la paraffine non fixée.

On examine après décantation et élimination du cyclohexane, la quantité de paraffine extraite de chacun des quatre mélanges, conduisant aux résultats suivants (Tableau 1):

**Tableau 1**

| Composition | Pourcentage de paraffine extraite au cyclohexane (%) |
|---|---|
| M3 | 93 |
| M4 | 74 |
| M5 | 79 |
| M6 | 68 |

Les résultats d'extraction obtenus montrent que :
- La composition M4 dont l'argile organophile commerciale a été modifiée par des ammoniums quaternaires révèle une diminution du pourcentage de paraffine extraite au moyen de cyclohexane par rapport à la composition témoin M3 préparée à partir d'une argile naturelle non modifiée.
- la composition M6 dont l'argile pulvérulente naturelle, a été modifiée par l'introduction de l'agent polaire de modification de l'argile Unicid® 350, selon l'invention, révèle une efficacité très importante car le pourcentage de paraffine extrait au moyen de cyclohexane, apparaît beaucoup plus faible que dans toutes les autres compositions.

Ainsi il apparaît que la paraffine est davantage physisorbée sur l'argile modifiée au moyen de l'agent polaire de modification de l'argile selon l'invention c'est-à-dire l'Unicid® 350.

Dès lors, le traitement de l'argile naturelle, par les polymères et/ou copolymères polyacides selon l'invention, qui sont des oligomères tel que l'Unicid® 350, augmente la capacité de physisorption et de rétention de la paraffine par ladite argile naturelle modifiée et ce, en comparaison avec la même argile naturelle traitée au moyen d'un mono acide carboxylique et en comparaison avec une argile organophile commerciale traitée par des ammoniums quaternaires, qui constituent les témoins de référence de l'art antérieur.

### Exemple n°5 :

Cet exemple concerne la mise en oeuvre d'oligomères polyacides comme agent polaire de modifications d'argiles naturelles utilisées dans des compositions thermorégulantes comportant de l'argile naturelle à modifier, l'agent polaire de modification des argiles et de la paraffine à changement de phase.

Trois compositions référencées M7, M8 et M9, préparées de la même manière, comprennent de l'argile naturelle, l'agent polaire de modification de l'argile et de la paraffine. Les deux premières M7 et M8 illustrent l'objet de l'invention et la troisième M9 constitue un témoin de référence.

L'agent polaire de modification de l'argile a été rendu liquide par chauffage puis ajouté une fois fondu sous malaxage à l'argile en poudre. A ce mélange, a été ajoutée la paraffine rendue préalablement liquide par chauffage.

Trois essais comparatifs ont été conduits, montrant l'intérêt d'utiliser les oligomères polyacides pour le traitement des argiles naturelles : des mesures d'enthalpie ont été effectuées sur ces essais et sur de la paraffine seule à titre de comparaison.

Les compositions préparées comprenaient comme argile, une argile de type smectite commercialisée par BENTOFRANCE sous le nom BENTONIL^{®} SV, comme paraffine, une paraffine commercialisée sous l'appellation LINPAR® 18-20 de SASOL, et comme agent polaire de modification des argiles naturelles, deux polymères différents à fonctions acide carboxylique selon l'invention, représentées ci-après par les références M7, M8, et à titre de comparaison, une composition témoin référencée ci-après M9, dont l'agent polaire de modification des argiles naturelles est un acide organique à longue chaîne hydrocarbonée.

Le premier polymère à fonction acide carboxylique retenu dans la première composition référencée M7 est l'Unicid® 350 de BAKER PETROLITE.

Le second polymère à fonctions acide carboxylique retenu dans la seconde composition référencée M8 est le Ceramer^{®} 1608 de BAKER PETROLITE.

La troisième composition référencée M9 qui est une composition témoin contient au titre de l'agent polaire de modification des argiles naturelles, de l'acide hexanoïque.

Quantitativement :
- La composition M7 contient 75% de paraffine, 3,75% d'Unicid® 350 et 21,25% d'argile naturelle.
- La composition M8 contient 75% de paraffine, 2,5 % de Ceramer® 1608 et 22,5% d'argile naturelle.
- La composition M9 contient 50% de paraffine, 7,5% d'acide hexanoïque et 42,5% d'argile naturelle.

Par la suite, on a examiné par analyse calorimétrique différentielle l'enthalpie de fusion rapportée au gramme de paraffine dans les trois compositions. Les résultats sont reportés dans le Tableau 2.

**Tableau 2**

| Composition | Enthalpie de fusion (J/g) |
|---|---|
| Paraffine seule | 143 |
| M7 | 155,2 |
| M8 | 155,8 |
| M9 | 152 |

Ainsi la paraffine déposée sur l'argile traitée par les agents de modification de ladite argile présente une enthalpie de fusion supérieure à celle de la paraffine seule, ce qui était totalement inattendu.

Les compositions M7 et M8 objets de l'invention ont une enthalpie de fusion supérieure à celle de la composition M9 témoin. De plus, les composés oligomères polyacides formant les agents polaires de modification des argiles naturelles se révèlent avoir une efficacité supérieure à celle du mono acide mis en oeuvre comme agent de modification dans la composition témoin M9 puisqu'il faut moins d'oligomères pour obtenir un effet supérieur.

Des essais complémentaires comparatifs ont été conduits montrant l'intérêt des oligomères polyacides pour le traitement des argiles à l'état naturel. Ces essais mettent en évidence la résistance à l'extraction, par un solvant organique des paraffines physisorbées sur le support minéral argileux traité selon l'invention.

Trois compositions quantitativement identiques mais différentes par les agents polaires de modification de l'argile présents ont été préparées. Les proportions étaient les suivantes :
- Composition M10 selon l'invention : 50 % de paraffine, 42,5% d'argile, 7,5% d'Unicid® 350.
- Composition M11 selon l'invention : 50 % de paraffine, 42,5% d'argile, 7,5 % de Ceramer® 1608..
- Composition témoin M12 (à titre de comparaison) : 50 % de paraffine, 42,5% d'argile, 7,5% d'acide hexanoïque.

Un pré-mélange d'argile et d'agent polaire de modification de l'argile a été chauffé au bain-marie, sous agitation. A ce pré-mélange ont été ajoutés les 50% de paraffine. Le mélange résultant, obtenu après contact intime d'une durée de 5 minutes a ensuite été refroidi, puis a été ajoutée dans chacun de ces mélanges la même quantité de cyclohexane agissant comme solvant d'extraction de la paraffine non fixée.

On examine après décantation et élimination du cyclohexane, la quantité de paraffine extraite de chacun des trois mélanges, conduisant aux résultats suivants :
- Composition M10 selon l'invention : 68% de paraffine ont été extraits,
- Composition M11 selon l'invention : Pas de décantation, Ce qui signifie que la paraffine n'a pu être extraite et est restée fixée sur son support minéral argileux pulvérulent, modifié par l'agent polaire de modification de l'argile,
- Composition témoin M12 : 79% de paraffine ont été extraits.

Les résultats d'extraction obtenus montrent que :
- la composition M10 dont l'argile pulvérulente naturelle, a été modifiée par l'introduction de l'agent polaire de modification de l'argile Unicid® 350, révèle une efficacité très importante car le pourcentage de paraffine extrait au moyen de cyclohexane, apparaît beaucoup plus faible que dans la composition témoin M12.

Ainsi la paraffine est davantage physisorbée sur l'argile modifiée au moyen de l'agent polaire de modification de l'argile selon l'invention c'est-à-dire l'Unicid® 350.
- En ce qui concerne la composition M11, dont l'argile pulvérulente naturelle a été modifiée par l'introduction de l'agent polaire de modification de l'argile qui est le Ceramer® 1608, elle révèle une efficacité extrême puisqu'il est constaté une absence de décantation, signifiant que l'agent polaire de modification de l'argile retenu est très performant pour modifier l'argile et la rendre particulièrement active pour la physisorption de la paraffine. Cet exemple montre aussi l'intérêt de ce procédé pour disperser une argile naturelle en milieu organique.

Ainsi le traitement de l'argile naturelle, par les polymères et/ou copolymères polyacides selon l'invention, qui sont des oligomères (respectivement l'Unicid® 350 et le Ceramer® 1608), augmente la capacité de physisorption et de rétention par ladite argile de la paraffine et ce, en comparaison avec la même argile naturelle traitée au moyen d'un mono-acide carboxylique qui constitue le témoin de référence.

### Exemple 6 :

Cet exemple concerne l'obtention de polyéthylène basse densité contenant une argile rendue organophile selon l'invention et présentant des propriétés de résistance à la flamme ainsi que des propriétés mécaniques améliorées.

Les argiles modifiées selon l'invention utilisées dans cet exemple sont préparées de la même manière qu'à l'exemple 1.
La première argile organophile (AO1) contient 90% en poids d'argile naturelle de type smectite commercialisée par la Société BENTOFRANCE sous le nom de BENTONIL® SV et 10% d'un agent polaire de modification de l'argile.
L'agent polaire de modification de l'argile est un polymère à fonctions acide carboxylique, commercialisé sous le nom de Ceramer^{®} 1608 par la société BAKER PETROLITE. Cet agent polaire de modification de l'argile présente un point de fusion à 72°C.
La deuxième argile organophile (A02) contient 85% en poids d'argile naturelle de type smectite commercialisée par la Société BENTOFRANCE sous le nom de BENTONIL® SV et 15% d'un, agent polaire de modification de l'argile.
L'agent polaire de modification de l'argile est un polymère à fonctions acide carboxylique, commercialisé sous le nom de Unicid^{®} 350 de BAKER PETROLITE. Cet agent polaire de modification de l'argile présente un point de fusion à 84°C.
La modification de l'argile naturelle par l'agent polaire de modification de l'argile s'effectue dans une extrudeuse bi-vis corotative de type CLEXTRAL tournant à 600 T/mn.

L'argile pulvérulente est introduite en tête d'extrudeuse par une trémie doseuse avec un débit de 12,75 kg/h et l'agent polaire de modification de l'argile est introduit simultanément sous forme de petits granulés par l'intermédiaire d'une trémie doseuse avec un débit de 2,25 kg/h.
L'extrudeuse comprenant 10 fourreaux, les 5 premiers fourreaux sont maintenus à une température de 80°C afin de maintenir l'agent polaire de modification de l'argile dans un état liquide, puis les 5 derniers fourreaux sont maintenus à la température ambiante.
On récupère, en sortie d'extrudeuse, une poudre d'argile modifiée rendue organophile selon l'invention.

Quant à la préparation du polyéthylène basse densité contenant l'argile précédemment traitée, dans le but d'augmenter les propriétés de résistance à la flamme et les propriétés mécaniques, elle est réalisée dans une extrudeuse bi-vis corotative de type CLEXTRAL.

Le polyéthylène basse densité est introduit en tête d'extrudeuse par une trémie dosèuse à un débit de 12,75 kg/h, et l'argile rendue organophile AO1 ou A02 est introduite simultanément avec un débit de 2,75kg/h. Les fourreaux de l'extrudeuse sont maintenus à une température de 205°C. Puis en sortie de filière, on réalise une granulation dans l'eau.
On obtient ainsi deux compositions M13 et M14 de polyéthylène basse densité contenant l'une (à savoir M13) l'argile rendue organophile AO1 et l'autre (à savoir M14) l'argile rendue organophile AO2.
La composition M13 comprend 85 % en poids de polyéthylène basse densité (ci-après abrégé PE-BD) et 15% d'argile modifiée AO1.
La composition M14 comprend 90 % en poids de polyéthylène basse densité et 10% d'argile modifiée A02.

La température de déflection (Heat Deflection Température : HDT) et l'indice limite d'oxygène (Limiting Oxygen Index : LOI) indicateur de résistance à l'inflammation sont mesurés sur les compositions M13 et M14 précédemment définies, et sont rassemblés dans le tableau 3 ci-dessous, et comparés aux résultats obtenus avec le même polyéthylène basse densité non traité M15 :

**Tableau 3**

| | | **Exemples selon invention** | | **Exemple comparatif** |
|---|---|---|---|---|
| | | M13 | M14 | M15 |
| | PE-BD | 85 | 90 | 100 |
| **Composition (% poids)** | AO1 | 15 | - | - |
| | A02 | - | 10 | - |
| **Propriétés mécaniques** | HDT (°C) | 51 | 50 | 45 |
| **Résistance à la flamme** | LOI (%) | 23 | 22 | 18 |

Comme le montrent les résultats présentés dans le tableau 3, les compositions M13 et M14 préparées avec deux argiles modifiées selon l'invention présentent des propriétés mécaniques et une résistance à la flamme meilleures que celles du polyéthylène basse densité non traité M15.

### Exemple N°7

Cet exemple concerne l'obtention de polyéthylène basse densité contenant une argile modifiée selon l'invention présentant des propriétés de résistance à la flamme améliorée

L'argile modifiée selon l'invention (A03) est préparée par extrusion d'une composition qui comprend 85% en poids d'argile naturelle de type bentonite commercialisée par la Société Süd Chemie sous le nom LAUNDROSIL® DGA et 15% d'un agent polaire de modification de l'argile.
L'agent polaire de modification de l'argile est un polymère à fonctions acide carboxylique, commercialisé sous le nom Ceramer^{®} 1608 par la Société BAKER PETROLITE. Cet agent polaire de modification de l'argile présente un point de fusion à 72°C.

La modification de l'argile naturelle par l'oligomère Ceramer® 1608 s'effectue dans une extrudeuse bi-vis corotative de type CLEXTRAL tournant à 600 T/mn.

L'argile pulvérulente est introduite en tête d'extrudeuse par une trémie doseuse avec un débit de 12,75 kg/h et l'agent polaire de modification de l'argile est introduit simultanément sous forme de petits granulés par l'intermédiaire d'une trémie doseuse avec un débit de 2,25 kg/h.
L'extrudeuse comprenant 10 fourreaux, les 5 premiers fourreaux sont maintenus à une température de 80°C afin de maintenir l'agent polaire de modification dans un état liquide puis les 5 derniers fourreaux sont maintenus à la température ambiante.

On récupère, en sortie d'extrudeuse, une poudre d'argile modifiée rendue organophile selon l'invention.

Le mélange polyéthylène basse densité et argile rendue organophile est réalisé dans une extrudeuse bi-vis corotative de type Clextral.

Le polyéthylène basse densité est introduit en tête d'extrudeuse par une trémie doseuse à un débit de 12,75 kg/h et l'argile rendue organophile (AO3) est introduite simultanément avec un débit de 2,75kg/h. Les fourreaux de l'extrudeuse sont maintenus à une température de 205°C. Puis en sortie de filière, on réalise une granulation dans l'eau.

L'indice limite d'oxygène (Limiting Oxygen Index : LOI) mesuré sur la composition M16 qui comprend en poids 89,25% de polyéthylène basse densité, 10% d'argile rendue organophile AO3 et 0,75% d'antioxydant Irganox, figure dans le tableau 4 ci-dessous et est comparé à celui du polyéthylène basse densité non traité M15:

**Tableau 4**

| | | **Exemple selon invention** | **Exemple comparatif** |
|---|---|---|---|
| | | M16 | M15 |
| **Composition (% poids)** | Polyéthylène basse densité | 89, 25 | 100 |
| | AO3 | 10 | - |
| | Antioxydant Irganox | 0,75 | - |
| **Résistance à la flamme** | LOI (%) | 23,5 | 18 |

D'après les résultats du tableau 4, la composition M16 préparée avec une argile modifiée selon l'invention présente une meilleure résistance à la flamme que le polyéthylène basse densité non traité M15.

## Revendications

1. Argiles naturelles modifiées rendues organophiles au moyen d'un agent polaire de modification pour augmenter leur capacité d'accrochage à l'égard de milieux organiques récepteurs **caractérisés en ce qu'**elles comportent selon une combinaison nouvelle :
a) des argiles naturelles contenant dans leurs structures des ions métalliques monovalents et/ou polyvalents,
b) un agent polaire de modification de l'état de surface desdites argiles choisi dans le groupe des oligomères à chaînes hydrocarbonées ayant des fonctions acide carboxyliques.

2. Argiles naturelles modifiées selon la revendication 1, **caractérisées en ce que** l'agent de modification est un copolymère dont les fonctions acides sont obtenues par greffage d'au moins un monomère insaturé ayant au moins une fonction acide carboxylique.

3. Argiles naturelles modifiées selon l'une ou l'autre des revendications 1 ou 2, **caractérisées en ce que** l'agent de modification est un copolymère oléfinique ayant des fonctions acide carboxylique résultant de la copolymérisation d'un monomère oléfinique insaturé et d'au moins un monomère insaturé ayant au moins une fonction acide carboxylique.

4. Argiles naturelles modifiées selon l'une au moins des revendications 1 à 3 **caractérisées en ce que** l'agent de modification desdites argiles a une masse molaire comprise entre 350 g/mol et 5000 g/mol.

5. Argiles naturelles modifiées selon l'une au moins des revendications 1 à 4, **caractérisées en ce que** l'agent de modification desdites argiles a un indice de saponification compris entre 0 et 220 mg de KOH/g.

6. Argiles naturelles modifiées selon l'une au moins des revendications 1 à 5, **caractérisées en ce que** l'agent de modification desdites argiles a un indice d'acide compris entre 25 mg de KOH/g et 160 mg de KOH/g.

7. Argiles naturelles modifiées selon l'une au moins des revendications 1 à 6, **caractérisées en ce que** l'agent de modification desdites argiles a un point de fusion compris entre 50°C et 250°C et préférentiellement entre 70°C et 120°C.

8. Argiles naturelles modifiées selon l'une au moins des revendications 1 à 7, **caractérisées en ce que** les ions métalliques au moins monovalents et/ou polyvalents des argiles naturelles à modifier, appartiennent au groupe constitué par le sodium, le potassium, le lithium, le calcium, le magnésium, le fer ferreux, le fer ferrique et l'aluminium, présent seul ou combiné dans lesdites argiles.

9. Argiles naturelles modifiées selon la revendication 8, **caractérisées en ce que** les argiles naturelles à modifier sont choisies dans le groupe constitué par les smectite, les chlorites, les bentonites, les attapulgites, les hectorites, les laponites, les montmorillonites, les micas, prises seules ou en mélange.

10. Argiles naturelles modifiées selon l'une au moins des revendications 1 à 9, **caractérisées en ce que** les argiles naturelles à modifier sont constituées de particules de tailles allant de 0,5 à 10 microns et préférentiellement de 0,5 à 3 microns.

11. Argiles naturelles modifiées selon l'une au moins des revendications 1 à 10, **caractérisées en ce qu'**elles comprennent de 99,9% à 75% en poids d'argiles naturelles et de 0,1% à 25% en poids d'agent de modification par rapport aux argiles naturelles modifiées.

12. Procédé d'obtention des argiles naturelles modifiées par extrusion selon l'une au moins des revendications 1 à 11, **caractérisé en ce que** :
• On met en oeuvre l'argile à l'état naturel à modifier, dont la structure contient des ions métalliques monovalents ou polyvalents dans une extrudeuse à vis munie de système de chauffage et de refroidissement et chauffant à une température choisie supérieure à la température de fusion de l'agent polaire de modification, utilisé seul ou en mélange avec une paraffine
• On met extemporanément ou simultanément mécaniquement en contact intime l'agent polaire de modification avec ladite argile à une température supérieure à celle du point de fusion de l'agent polaire de modification de l'argile.
• on recueille après refroidissement une poudre directement utilisable pour les différentes mises en oeuvre.

13. Utilisation des argiles naturelles modifiées selon l'une au moins des revendications 1 à 11, en tant que charges minérales organophiles dans les polymères pour augmenter leur ignifugation, pour améliorer leur capacité à être peintes, pour rendre plus performant leurs caractéristiques physiques ou mécaniques, ou encore comme charges minérales dans l'industrie des revêtements ou être utilisées comme supports organophiles pour des composés organiques à changements de phases dans le domaine de la thermorégulation sous forme d'enductions de supports textiles, de revêtements de fibres, de revêtements d'intérieur d'automobile, de revêtements de panneaux rigides, de composants pour des produits destinés au bâtiment, de composants pour des emballages fonctionnels, de composants pour des produits et objets à usage médical et de confort de la personne physique ou support de principe actif organique.

## Patentansprüche

1. Modifizierte natürliche Tone, die organophil durch Behandlung mit einer polaren Modifizierungsmittel geworden sind, um ihre Bindungsfähigkeit in Bezug auf organische Aufnahmemedium zu erhöhen, **dadurch gekennzeichnet, daß** sie umfassen, in einer neuartigen Kombination:
(a) natürliche Tone, die als Teil ihrer Struktur einwertige und / oder mehrwertige Metallionen enthalten;
(b) ein polares Modifikationsmittel, das den Oberflächenzustand der Tone modifiziert, wobei das Modifikationsmittel aus der Gruppe bestehend aus Kohlenwasserstoffkette Oligomere mit Carbonsäurefunktionen ausgewählt ist.

2. Modifizierte natürliche Tone nach Anspruch 1, **dadurch gekennzeichnet, daß** das Modifizierungsmittel ein Copolymer ist, wobei die Säurefunktionen davon durch Aufpfropfung von mindestens einem ungesättigten Monomer mit mindestens einer Carbonsäurefunktion erhalten wird.

3. Modifizierte natürliche Tone nach einem der Ansprüche 1 oder 2, **dadurch gekennzeichnet, daß** das Modifizierungsmittel ein Olefin-Copolymer mit Carbonsäurefunktionen ist, das aus der Copolymerisation eines ungesättigten Olefinpolymer und mindestens einem ungesättigten Monomer mit mindestens einer Carbonsäurefunktion erhalten wird.

4. Modifizierte natürliche Tone nach einem oder mehreren der Ansprüche 1 bis 3, **dadurch gekennzeichnet, daß** das Modifizierungsmittel für die Tone eine Molmasse zwischen 350 g/mol und 5000 g/mol aufweist.

5. Modifizierte natürliche Tone nach einem oder mehreren der Ansprüche 1 bis 4, **dadurch gekennzeichnet, daß** das Modifizierungsmittel für die Tone eine Verseifungszahl von 0 bis 220 mg KOH/g aufweist.

6. Modifizierte natürliche Tone nach einem oder mehreren der Ansprüche 1 bis 5, **dadurch gekennzeichnet, daß** das Modifizierungsmittel für die Tone eine Säurezahl von 25 mg KOH/g bis 160 mg KOH/g aufweist.

7. Modifizierte natürliche Tone nach einem oder mehreren der Ansprüche 1 bis 6, **dadurch gekennzeichnet, daß** das Modifizierungsmittel für die Tone einen Schmelzpunkt zwischen 50°C und 250°C, und vorzugsweise, zwischen 70°C und 120°C aufweist.

8. Modifizierte natürliche Tone nach einem oder mehreren der Ansprüche 1 bis 7, **dadurch gekennzeichnet, daß** die mindestens einwertige und / oder mehrwertige Metallionen der zu modifizierenden natürlichen Tonen, aus einer Gruppe bestehend aus Natrium, Kalium, Lithium, Calcium, Magnesium-, Eisen-II, Eisen-III und Aluminium, alleine oder in Kombination ausgewählt sind.

9. Modifizierte natürliche Tone nach Anspruch 8, **dadurch gekennzeichnet, daß** die zu modifizierenden natürlichen Tone aus der Gruppe bestehend aus Smektiten, Chloriten, Bentoniten, Attapulgiten, Hectoriten, Laponiten, Montmorilloniten, Glimmern, allein oder in Mischung, ausgewählt sind.

10. Modifizierte natürliche Tone nach irgendeinem der Ansprüche 1 bis 9, **dadurch gekennzeichnet, daß** die zu modifizierenden natürlichen Tone bestehen aus Teilchen mit einer Größe von 0,5 bis 10 Mikrometer und vorzugsweise von 0,5 bis 3 Mikrometern.

11. Modifizierte natürliche Tone nach irgendeinem der Ansprüche 1 bis 10, **dadurch gekennzeichnet, daß** sie aus 99,9% bis 75 Gew.% natürlichen Tonen und von 0,1% bis 25 Gew.% Modifizierungsmittel in Bezug auf die modifizierten natürlichen Tone bestehen.

12. Verfahren zur Gewinnung von modifizierten natürlichen Tonen nach einem der Ansprüche 1 bis 11 durch Extrusion, **dadurch gekennzeichnet, daß**:
- der zu modifizierende natürliche Ton, deren Struktur ein-oder mehrwertige Metallionen enthält, in einen Schneckenextruder mit Heiz-und Kühlsystem eingesetzt wird, bei einer vorbestimmten Temperatur, die größer als die Schmelztemperatur des polaren Modifizierungsmittels ist, allein oder in Kombination mit einem Paraffin;
- das polare Modifizierungsmittel, entweder ungleichzeitig oder gleichzeitig, in engen mechanischen Kontakt bei einer Temperatur größer als die Schmelztemperatur des polaren Modifizierungsmittels mit dem Ton gebracht wird;
- das nach dem Abkühlen erhaltene Pulver wird abgenommen und für verschiedene Anwendungen direkt einsetzbar ist.

13. Verwendung von modifizierten natürlichen Tonen nach einem der Ansprüche 1 bis 11, als organophiler Mineralzusatz in Polymeren, um deren Feuerbeständigkeit zu erhöhen, um deren Malfähigkeit zu verbessern, um deren physikalischen oder mechanischen Leistungen zu verbessern, oder als Mineralzusatz in der Textilindustrie, oder als organophile Stützstoffe in organischen Phasenwechselverbindungen auf dem Gebiet der Thermoregulation in der Form von Textilbeschichtungen, Faserbeschichtungen, Automobilinnenbeschichtungen, Beschichtungen von starren Platten, Komponenten für Produkte für die Bauindustrie, Bestandteile für funktionale Verpackungen, Komponenten für Produkte und Gegenstände für medizinische Zwecke und persönlichen physikalischen Komfort oder als Träger für organische Wirkstoffe.

## Claims

1. Modified natural clays, made organophilic via a polar modifying agent in order to increase their binding capacity with regard to organic receiving media, **characterised in that** they comprise, in a novel combination:
(a) natural clays containing, as part of their structure, monovalent and/or polyvalent metallic ions;
(b) a polar modifying agent that modifies the surface state of said clays, selected from the group consisting of hydrocarbon chain oligomers having carboxylic acid functions.

2. Modified natural clays according to claim 1, **characterised in that** the modifying agent is a copolymer, the acid functions of which are obtained by grafting at least one unsaturated monomer having at least one carboxylic acid function.

3. Modified natural clays according to any one of claim 1 or claim 2, **characterised in that** the modifying agent is an olefin copolymer having carboxylic acid functions resulting from the copolymerisation of an unsaturated olefin polymer and at least one unsaturated monomer having at least one carboxylic acid function.

4. Modified natural clays according to one or more of claims 1 to 3, **characterised in that** the modifying agent for said clays has a molar mass comprised between 350 g/mol and 5000 g/mol.

5. Modified natural clays according to one or more of claims 1 to 4, **characterised in that** the modifying agent for said clays has a saponification index comprised between 0 and 220 mg KOH/g.

6. Modified natural clays according to one or more of claims 1 to 5, **characterised in that** the modifying agent for said clays has an acid index comprised between 25 mg KOH/g and 160 mg KOH/g.

7. Modified natural clays according to one or more of claims 1 to 6, **characterised in that** the modifying agent for said clays has a melting point comprised between 50°C and 250°C and preferably between 70°C and 120°C.

8. Modified natural clays according to one or more of claims 1 to 7, **characterised in that** the at least monovalent and/or polyvalent metallic ions of the natural clays to be modified belong to a group consisting of sodium, potassium, lithium, calcium, magnesium, ferrous iron, ferric iron, and aluminium, alone or combined within said clays.

9. Modified natural clays according to claim 8, **characterised in that** the natural clays to be modified are selected from the group consisting of smectites, chlorites, bentonites, attapulgites, hectorites, laponites, montmorillonites, micas, alone or in a mixture.

10. Modified natural clays according to any one of claims 1 to 9, **characterised in that** the natural clays to be modified are made up of particles having a size of 0.5 to 10 microns and preferably of 0.5 to 3 microns.

11. Modified natural clays according to any one of claims 1 to 10, **characterised in that** they comprise from 99.9% to 75% by weight of natural clays and from 0.1% to 25% by weight of modifying agent with respect to the natural modified clays.

12. Method for obtaining modified natural clays according to any one of claims 1 to 11 by extrusion, **characterised in that**:
- the natural clay to be modified, the structure of which contains monovalent or polyvalent metallic ions, is placed into a screw extruder having a heating and cooling system, at a predetermined temperature that is greater than the melting point temperature of the polar modifying agent, used alone or in combination with a paraffin;
- the polar modifying agent is brought into intimate mechanical contact, either extemporaneously or simultaneously, with said clay, at a temperature greater than the melting point temperature of the polar modifying agent;
- the powder obtained after cooling is recovered and directly usable for various applications.

13. Use of modified natural clays according to any one of claims 1 to 11, as an organophilic mineral additive in polymers to increase their flame retardance, to improve their capacity for being painted, to improve their physical or mechanical performance, or as a mineral additive in the textile industry or for use as organophilic supports in organic phase change compounds in the field of thermoregulation in the shape of textile coatings, fibre coatings, automobile interior coatings, rigid panel coatings, components for products intended for the building industry, components for functional packaging, components for products and objects for medical use and personal physical comfort, or as a support for organic active ingredients.
